Europäisches Patentamt

European Patent Office

Office européen des brevets

(19)

(11) Numéro de publication: **0 035 943**
**B1**

(12) **FASCICULE DE BREVET EUROPEEN**

(45) Date de publication du fascicule du brevet: **11.07.84**

(51) Int. Cl.³: **G 11 B 5/22, G 11 B 5/42**

(21) Numéro de dépôt: **81400351.3**

(22) Date de dépôt: **06.03.81**

(54) **Tête magnétique d'enregistrement et de lecture de données magnétiques à largeur de piste variable.**

(30) Priorité: **11.03.80 FR 8005418**

(43) Date de publication de la demande:
**16.09.81 Bulletin 81/37**

(45) Mention de la délivrance du brevet:
**11.07.84 Bulletin 84/28**

(84) Etats contractants désignés:
**DE FR GB IT SE**

(56) Documents cités:
**CH - A - 395 575**
**GB - A - 831 492**
**GB - A - 1 500 593**
**US - A - 2 947 592**
**US - A - 3 060 279**
**US - A - 3 209 078**
**US - A - 3 353 168**

**PATENTS ABSTRACTS OF JAPAN, vol. 1, no. 103, 13 septembre 1977, page 3236 E77 ELECTRONICS, vol. 46, no. 3, 1er février 1973, New York, US M. MURAI: "Hall-effect magnetic sensor reads data at any speed", pages 91-96**

(73) Titulaire: **L.C.C.-C.I.C.E. - COMPAGNIE EUROPEENNE DE COMPOSANTS ELECTRONIQUES**
**101, Boulevard Murat**
**F-75781 Paris Cedex 16 (FR)**

(72) Inventeur: **Chabrolle, Jacques**
**Thomson-CSF SCPI 173, bld Haussmann**
**F-75360 Paris Cedex 08 (FR)**

(74) Mandataire: **Vesin, Jacques et al,**
**THOMSON-CSF SCPI 173, Bld Haussmann**
**F-75379 Paris Cedex 08 (FR)**

(56) Documents cités:
**PATENTS ABSTRACTS OF JAPAN, vol. 3 no. 81, 12 juillet 1979, page 76 E 122 IBM TECHNICAL DISCLOSURE BULLETIN, vol. 18, no. 6, novembre 1975, New York, US N. NETER et al.: "Magnetic head" pages 1744-1745**

Courier Press, Leamington Spa, England.

## Description

La présente invention se rapporte au domaine de l'enregistrement magnétique, et concerne les transducteurs électro-magnétiques habituellement désignés sous le nom de "têtes". De tels transducteurs coopèrent avec un support magnétisable mobile dont les variations locales de l'état magnétique représentent l'enrigistrement proprement dit, et ont pour fonction de convertir ces variations en un signal électrique exploitable disponible à leurs bornes. Symétriquement, l'application d'un signal électrique à leurs bornes détermine une magnétisation variable dans le support magnétisable mobile qu'on fait défiler devant ces transducteurs.

Le transfert des variations de magnétisme réciproques entre une telle tête et un support s'effectue par défilement de celui-ci devant un entrefer ménagé dans un circuit magnétique en forme générale de tore, et les variations de flux magnétique dont le circuit magnétique est le siège, sont soit créées, dans le cas de l'enregistrement, soit transformées en signal électrique, dans le cas de la lecture, par des enroulements en forme de bobinages traversés par le circuit magnétique.

Dans les utilisations pratiques, on fait le plus souvent appel à des têtes différentes pour l'enregistrement et la lecture, la largeur de l'entrefer et la matériau dont est constitué le circuit magnétique n'étant pas les mêmes si l'on désire optimiser le résultat de chaque opération. C'est le cas par exemple dans le domaine de l'électroacoustique.

Cependant, dans d'autres domaines, tel que celui des cartes à données magnétiques, par exemple les cartes de crédit, l'encombrement présenté par des têtes séparées ne permettrait pas de satisfaire aux normes définies par les règlements internationaux, et il a été proposé de réunir les deux têtes d'enregistrement et de lecture et un boîtier unique, les deux entrefers faisant partie de deux circuits magnétiques soit juxtaposés, soit même imbriquées l'un dans l'autre, dispositions permettant d'obtenir des entrefers successifs très proches l'un de l'autre.

La mise en oeuvre de deux entrefers distincts est justifiée, d'autre part, par une particularité de l'enregistrement magnétique, lorsqu'il est mis en oeuvre dans le domaine des cartes à données. Celles-ci se prêtent mal, par leur forme, et à l'opposé du cas des bandes magnétiques, à l'obtention d'un défilement géométrique parfaitement défini. En pratique, cette particularité se traduit par des fluctuations dans la position géométrique transversale du support pendant son défilement, conduisant à des instabilités du signal lorsqu'on fait passer devant une tête de lecture une piste magnétisée par la même tête utilisée en fonction enregistrement.

Pour s'affranchir des problèmes de tolérances mécaniques des emplacements des pistes magnétiques, on a constaté qu'il était nécessaire d'enregistrer une piste pratiquement 3 fois plus large que la largeur de la piste de lecture, disposition permettant d'assurer un niveau de lecture constant, même si des fluctuations transversales interviennent au cours du défilement de la carte devant la tête.

La réalisation de cette disposition ne présente pas de difficultés particulières: l'entrefer d'enregistrement est simplement choisi pour avoir, transversalement, une longueur triple de la longueur de l'entrefer de lecture.

Cependant, comme il sera expliqué plus loin en détail, on constate en pratique que la séparation des fonctions des deux entrefers n'est pas complètement obtenue dans ces têtes combinées, bien que les enroulements électriques d'enregistrement et de lecture soient distincts; en fait, les deux entrefers successifs enregistrent et lisent simultanément tous les deux, de façon néfaste, les données magnétiques, déterminant des risques d'erreur, en particulier sur signaux numériques de type binaire.

On est donc souvent conduit, dans les applications, à renoncer aux têtes à deux entrefers, et à choisir la solution simple de la tête à entrefer unique, assumant alternativement les fonctions d'enregistrement et de lecture. Cette solution présente l'inconvénient, secondaire dans le cas des enregistrements de données numériques de faire renoncer à l'optimisation des performances procurée par les têtes à deux entrefers distincts; mais elle interdit la lecture sur une largeur plus étroite que celle de la piste enregistrée, inconvénient dont on a montré plus haut l'importance.

Il est connu du brevet américain 3 060 279 d'utiliser des têtes magnétiques comportant un entrefer unique dont les pièces polaires sont d'inégales largeurs, la pièce polaire la plus large définissant la largeur de la piste en écriture, tandis que la largeur la plus faible définit la largeur de piste en lecture. De cette manière, on évite la possibilité de litre des signaux qui n'ont pas été complétement effacés au cour de l'enregistrement précédent. Toutefois, une telle réalisation implique une réluctance magnétique relativement importante aux lignes de force de fuite dans l'air présenté entre les deuxsurfaces polaires.

Pour éviter cet inconvénient, il est suggéré dans le brevet américain 3 353 168 ou dans le brevet japonais JP—A—5 235 616, d'adjoindre latéralement à la pièce polaire la plus étroite, deux barrettes afin d'améliorer d'une part, l'enregistrement sur et d'autre part, la lecture. Toutefois, une telle réalisation présente un inconvénient important. Ces barrettes étant rapportées sur la pièce polaire la plus large d'une part, et latéralement sur la pièce polaire la moins large d'autre part, on créé ainsi une prolongation de l'entrefer principal, mais également deux entrefers supplémentaires situés entre chacune des barrettes et la pièce polaire de faible largeur. Cette dernière est donc isolée magnétiquement desdites barrettes. Ceci se traduit en fonction enregistrement par deux zones non enregistrées, de largeur légèrement supérieure à la valeur de ces entrefers latéraux. Si au cours de la lecture, la pièce polaire de faible largeur correspondant à la largeur lue par la tête magnétique ne se trouve pas exactement disposée comme au cours de l'enregistrement, une seule partie du signal enregistré sera lue par le tête magnétique, une partie de la piste magnétique étant dépourvue de signal enregistré.

La tête d'enregistrement et de lecture selon l'invention permet d'éviter cet inconvénient. Cette tête d'enregistrement et de lecture de données magnétiques comporte un circuit magnétique (1) muni d'un entrefer (10) en matériau non magnétique d'épaisseur comprise entre 2 et 100 microns délimité par deux faces polaires rectangulaires disposées en vis-à-vis, la première étant de largeur $L_2$ supérieure à la largeur $L_1$ de la seconde qui comporte deux plaquettes réalisant avec elle au contact de l'entrefer une largeur $L_2$, ainsi que des moyens électriques (2) et (3) pour l'application et l'extraction respectives sur un support mobile de signaux d'enregistrement et de lecture en coopération avec l'entrefer 10. Elle est caractérisée en ce que les plaquettes sont des plaquettes latérales réalisées d'un seul tenant avec la seconde pièce polaire sur une épaisseur inférieure ou égale à 500 microns et donnant avec elle un contour rectangulaire égal à celui de la première pièce polaire, de manière à permettre un enregistrement de largeur de l'ordre de $L_2$ et une lecture de largeur de l'ordre de $L_1$ sur le support mobile.

On constate ainsi qu'une pièce polaire d'un seul tenant de largeur identique à la pièce polaire la plus large sur une faible épaisseur puis ensuite de largeur réduite permet de bénéficier des avantages des têtes magnétiques à pièces polaires de largeurs différentes tout en évitant les inconvénients cités plus haut. A l'étape d'enregistrement, quand le support magnétique défile devant l'entrefer, son état magnétique final dépend seulement, toutes choses égales par ailleurs, du champ qui règne au niveau du bord de sortie de l'entrefer, champ qui varie à la fréquence du signal à enregistrer et à celle du signal de polarisation haute fréquence caractéristique de l'enregistrement magnétique. En revanche, à l'étape de lecture, le signal électrique recueilli aux bornes des enroulements dépend de la largeur elle-même de l'entrefer, la fréquence maximale qu'il est possible de lire avant annulation du signal correspond au cas où l'entrefer de lecture a une largeur égale à la longueur d'onde correspondante enregistrée sur le support.

La tête d'enregistrement et de lecture de l'invention exploite cette différence.

A la lecture, les lignes de force du champ magnétique créé par le défilement du support magnétique restent localisées dans la partie de l'entrefer correspondant à la pièce polaire de largeur $L_1$.

En revanche, à l'enregistrement, seul le bord de sortie de l'entrefer a un rôle et c'est celcui qui correspond à la dimension transversale de largeur $L_2$ de la surface polaire de sortie.

Suivant que la tête magnétique de l'invention est utilisée en régime d'enregistrement ou de lecture, il y a ainsi sélection automatique de la largeur transversale de la piste enregistrée ou lue.

L'invention sera mieux comprise à l'aide de la description ci-après, en s'appuyant sur les dessins annexés où:

— la figure 1 représente une tête d'enregistrement-lecture à deux entrefers selon l'art connu;

— la figure 2 représente une tête d'enregistrement-lecture à entrefer unique selon l'art connu;

— la figure 3 représente un exemple de réalisation de la tête d'enregistrement-lecture selon l'invention;

— la figure 4 représente des diagrammes en axes rectangulaires, illustrant les résultats obtenus avec une tête magnétique selon l'invention, en fonction des principaux paramètres dimensionnels;

— les figures 5 à 13 représentent les différentes étapes d'un procédé de fabrication d'une tête magnétique selon l'invention;

— la figure 14 représente un grossissement d'une bande magnétique comportant une représentation des lignes de force du champ magnétique existant entre la couche magnétique et la tête magnétique au cours des operations de lecture et/ou ecriture.

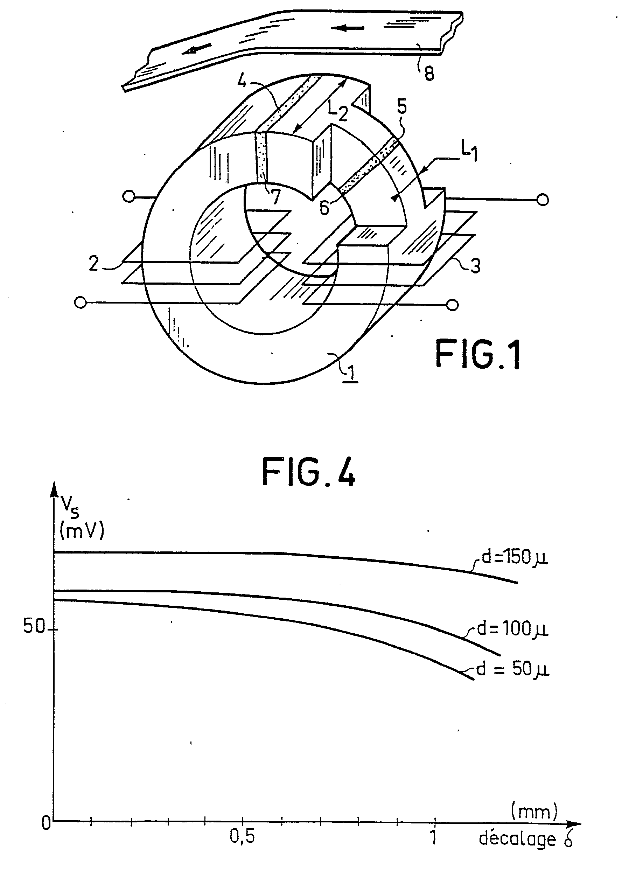

La figure 1 représente une tête d'enregistrement-lecture à deux entrefers selon l'art connu.

Elle se compose d'un circuit magnétique 1 en forme de tore et de deux enroulements d'enregistrement 2 et de lecture 3, traversés par le circuit magnétique. Celui-ci est muni de deux entrefers 4 et 5, respectivement d'enregistrement et de lecture, l'un et l'autre étant remplis de cales 6, 7 faites d'un matériau non magnétique tel que le laiton. L'entrefer de lecture 5 est transversalement de largeur $(L_1)$ inférieure à celle $(L_2)$ de l'entrefer d'enregistrement 4, pour obtenir que, pour les raisons exposées plus haut, lors des passages successifs du support magnétisable 8 devant les entrefers, la largeur de la piste réellement lui soit inférieure à la largeur de la piste enregistrée. Une tête magnétique de ce type présente l'inconvénient de ne pas assurer la séparation des fonctions des entrefers, et on constate, aux stades respectifs d'enregistrement et de lecture, que les deux entrefers enregistrent et lisent simultanément, avec création de signaux parasites décalés dans le temps.

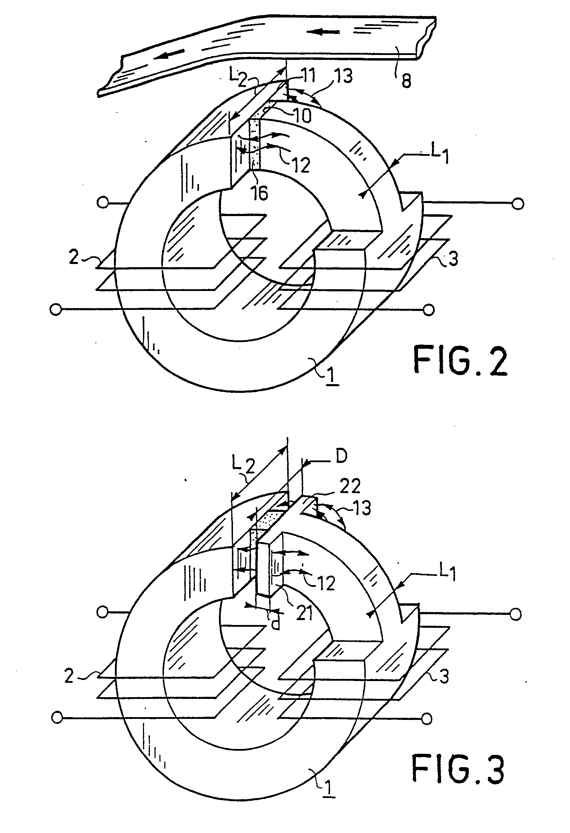

La figure 2 représente une tête d'enregistrement-lecture à entrefer unique selon l'art connu.

Les mêmes moyens étant désignés par les mêmes nombresrepères, la tête se caractérise par le fait que les dimensions transversales respectives $L_1$ et $L_2$ des deux surfaces polaires en vis-à-vis de l'entrefer unique sont differentes.

Le fonctionnement d'une telle tête est le suivant:

A l'étape de lecture d'un support magnétique enregistre, la largeur de piste lue est égale à $L_1$, dimension transversale réduite de l'entrefer effectif, défini pour les raisons exposées plus haut, par les surfaces communes en vis-à-vis, appartenant aux deux surfaces polaires.

En revanche, à l'étape d'enregistrement, l'état magnétique du support magnétisable est défini, ainsi qu'il a également été explique plus haut, par le champ existant au niveau du bord de sortie 11 de l'entrefer, correspondant à la largeur $L_2$ qui est la grande dimension transversale de l'entrefer. L'efficacité magnétique des parties latérales du bord de sortie est obtenue, pour sa plus grande part, grâce aux lignes de force de fuite telles que 12 et 13, qui referment latéralement dans l'air les lignes de force de l'induction régnant dans le circuit magnétique.

Ainsi, suivant que les enroulements 2 et 3 sont placés en régime d'enregistrement ou de lecture, il y a sélection automatique de la largeur transversale $L_2$ ou $L_1$ de l'entrefer effectif d'enregistrement ou de lecture de la tête.

La figure 3 représente une tête d'enregistrement-lecture selon l'invention, comportant un répartiteur latéral de champ d'entrefer.

Suivant l'invention, on réduit la réluctance magnétique présentée aux lignes de force de fuite 12, 13 dans l'air de la tête de la figure 2, en disposant, de chaque côté de la surface polaire correspondant à la petite largeur transversale $L_1$, deux plaquettes 21 et 22 en matériau magnétique, constituant un répartiteur latéral de champ dans l'entrefer, d'un seul tenant avec la piece polaire de largeur $L_1$. Ce répartiteur augmente de plus l'induction utile qui règne dans l'ensemble du circuit magnétique de la tête, et son rôle s'étend ainsi jusqu'à l'amélioration du niveau de sortie du signal électrique recueilli aux bornes des enroulements en régime de lecture.

Le choix des dimensions optimales, en épaisseur d et largeur transversale D, du répartiteur de champ de la figure 3, sont du domaine des essais systématiques.

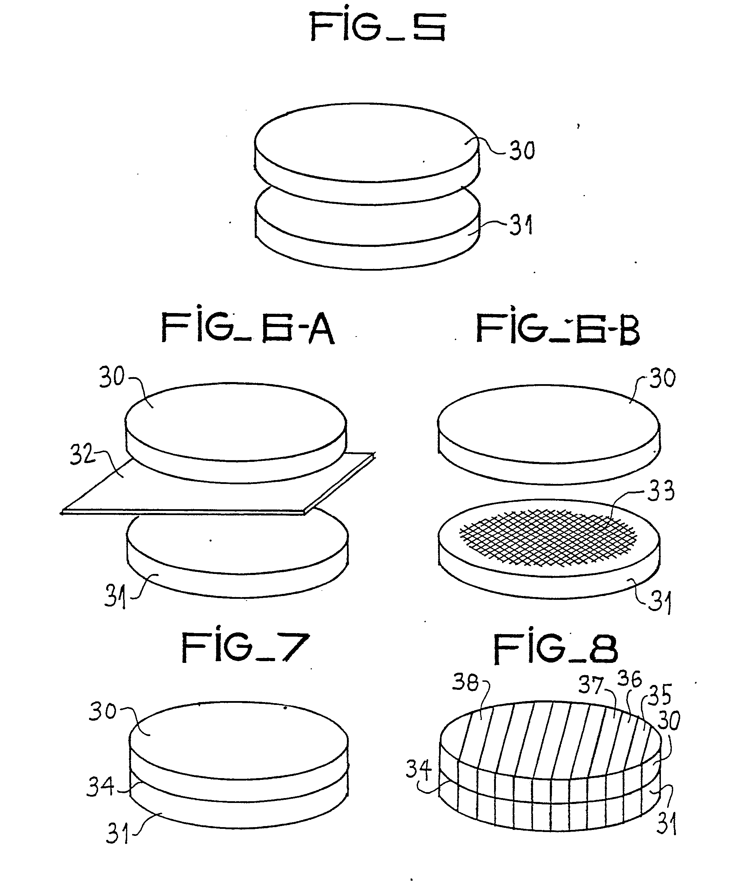

La figure 4 représente un diagramme, en axes rectangulaires, résumant les études expérimentales faites par la Demanderesse, d'une part sur l'épaisseur des plaquettes latérales, d'autre part sur la sensibilité aux décalages transversaux dus aux instabilités de défilement.

Ces courbes montrent notamment que le niveau de sortie en régime de lecture $V_s$ augmente lorsque l'épaisseur des plaquettes latérales, constituant le répartiteur, augmente au delà de valeurs proches de la largeur de l'entrefer, typiquement 50 micromètres pour un entrefer de 10 micromètres: elles montrent aussi que, dans ces conditions, pour une piste lue de largeur moitié de celle de la piste enregistrée de 6,5 mm, la stabilité du niveau de sortie $V_s$ en fonction des fluctuations géométriques transversales de position est excellente, typiquement de $\pm 3\%$ pour des décalages transversaux $\delta$ du support mobile de $\pm 0,9$ mm, décalages supérieurs à ceux que les dispositifs modernes de défilement pour cartes à données magnétiques sont capables d'assurer.

On doit observer, en terminant, que les résultats fournis par la tête magnétique de l'invention, indiqués ci-dessus, l'ont été à titre d'ordre de grandeur, et que les avantages procurés par l'invention ont été notamment vérifiés dans le cas d'entrefers de largeurs comprises entre 2 et 100 microns, d'épaisseurs de plaquette comprises entre 0 et 500 microns, et pour des vitesses de supports magnétiques comprises entre 30 mm et 1500 mm par seconde.

Les figures 5 à 13 représentent les différentes étapes d'un procédé de fabrication d'une tête magnétique selon l'invention.

Sur la figure 5, on a représenté deux plaques de ferrite 30, 31 parfaitement rectifiées et polies, plaques entre lesquelles on interpose une fine couche de ferrite non magnétique 32 (figure $6_a$). Selon une autre variante de réalisation (figure $6_b$), on dépose une pâte de ferrite de zinc 33 sur la plaque de ferrite magnétique 31. Généralement, l'épaisseur du film de ferrite ou de pâte de ferrite est comprise entre 10 et 100 microns et de préférence de 10 et 60 microns.

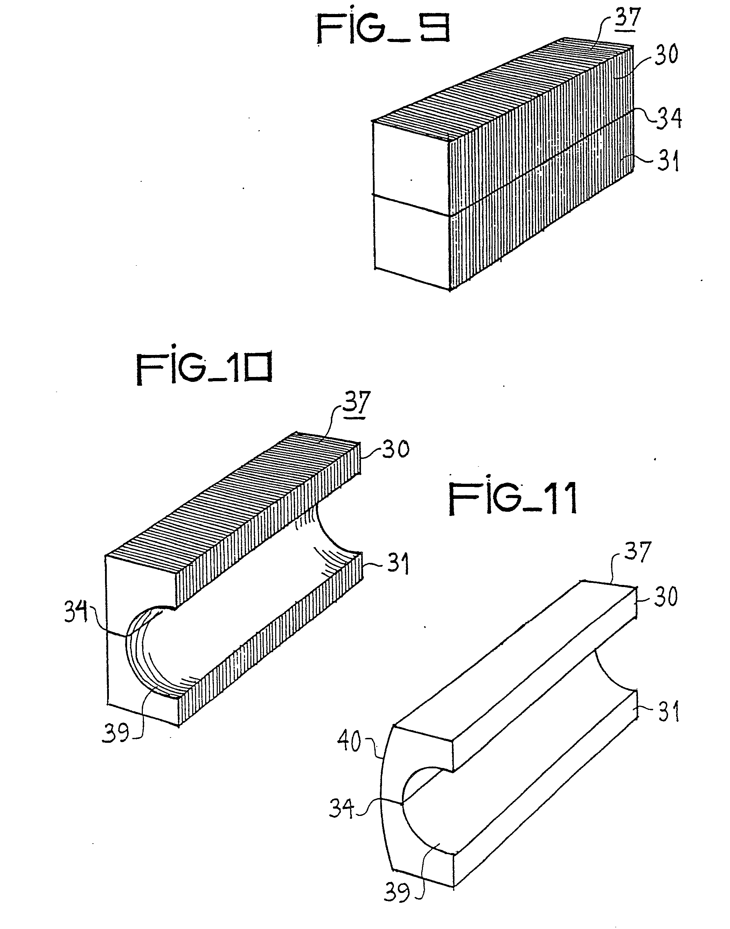

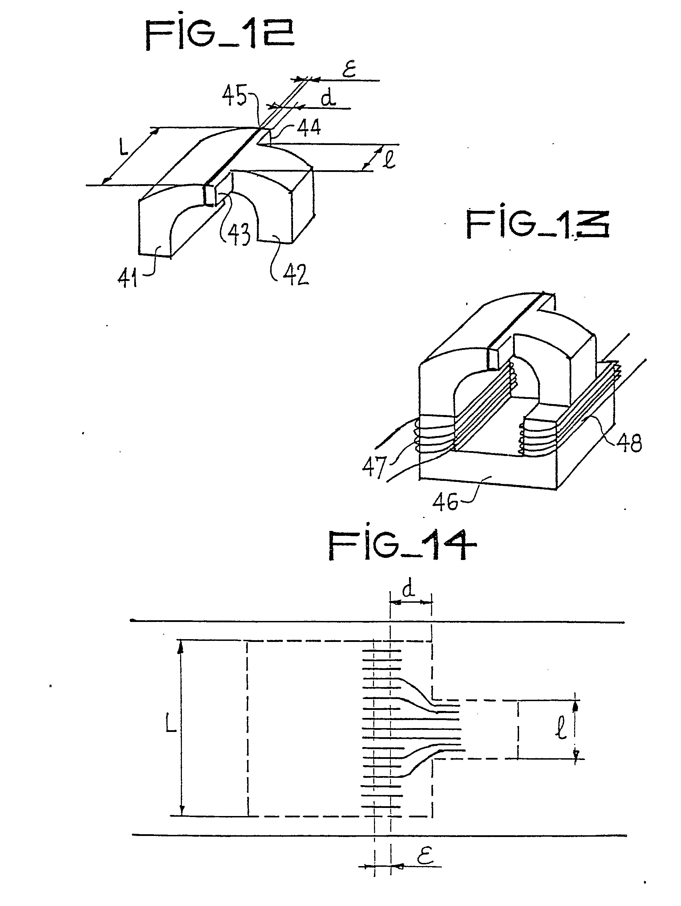

On effectue ensuite le frittage de cette couche non magnétique sous pression pour obtenir un bloc représenté sur la figure 7, ayant une structure homogène. La zone non magnétique représentée par 34 est donc située dans le plan médian de ce bloc homogène. Une opération de tronçonnage permet ensuite (voir figure 8) la réalisation de barrettes telles que 35, 36, 37, ... 38. Chaque bloc sensiblement parallélépipédique tel que 37 (représenté sur la figure 9 en gros plan) est ensuite soumis à une opération de rainurage d'une gorge semi-cylindrique 39 (voir figure 10), ladite rainure étant sensiblement symétrique par rapport au plan contenant le film de ferrite non magnétique 34. L'opération suivante consiste à réaliser un surfaçage cylindrique du barreau parallélépipédique (figure 11) pour obtenir la face du travail 40 de la tête magnétique. L'opération suivant consiste à découperle barreau de la figure 11 en têtes individuelles de largeur L (voir figure 12) plus à réaliser un enlèvement de matière par tout moyen adapté de manière à ne laisser subsister sur la tête magnétique qu'une partie plus étroite pour la partie lecture, cette partie de la tête ayant une largeur 1. On obtient ainsi une tête telle que représentée sur la figure 12 possédant à droite sur cette figure une partie correspondant à la partie lecture de la tête ayant une largeur 1 inférieure à L, partie représentée par le chiffre 42, prolongée latéralement par deux épaulements 43 et 44 d'un seul tenant avec ladite partie 42. Ces épaulements 43 et 44 ont une épaisseur d, tandis que l'épaisseur de l'entrefer 45 a une valeur e. Il est à remarquer, bien entendu, que de préférence, les deux épaulements 43 et 44 auront les mêmes dimensions, ce qui donne une symétrie à la tête de lecture, structure préférable pour bénéficier pleinement des avantages de l'invention.

Sur la figure 13, on a représenté schématiquement une tête de lecture et/ou d'écriture, conforme à l'invention telle que réalisée selon le procédé décrit ci-dessus. La partie supérieure de cette tête est conforme à la partie représentée sur la figure 12 tandis que l'on a rejouté un circuit magnétique de fermeture 46 en forme de U, ainsi que des bobinages respectivement d'écriture et de lecture 47 et 48.

Sur la figure 14, on a représenté une vue très grossie de la bande magnétique et une projection de la tête selon l'invention. L'enregistrement s'effectue sur toute la largeur L de la bande magnétique tandis que la lecture s'effectue sur la largeur 1, inférieure à L. Dans la phase écriture, le courant circulant dans la bobine engendre un champ magnétique qui est canalisé jusqu'à la bande magnétique par l'armature d'écriture 41. Les lignes de force pénètrent dans la couche magnétique de la bande et retrouvent de l'autre côté de l'entrefer une section suffisamment importante pour se refermer dans l'armature 42 à droite de l'entrefer. Ceci permet une écriture sur la largeur totale de la face active L.

En fonction lecture, la bande magnétique qui est le siège d'une induction qui engendre donc un champ se déplace au travers de la bobine de lecture et donne naissance à une force électromotrice aux bornes de celle-ci. Le changement brutal de section de la face active qui passe de L à 1, fait que la réluctance magnétique du circuit est grande sur les bords et relativement faible au centre c'est-à-dire dans l'axe de l'armature de lecture. Dans ces conditions, la largeur effectivement lue sur la bande magnétique a une valeur légèrement plus grande que 1 mais beaucoup plus faible que L. Ceci permet donc effectivement de pallier aux différentes tolérances mécaniques mises en jeu dans l'exploitation des systèmes de lecture de supports revêtus de pistes magnétiques tels que par exemple les cartes de crédit.

On doit noter aussi que, bien que la description ait été faite dans le cas d'une tête à enroulements, le cas d'une tête de lecture à effet Hall doit être compris dans le domaine de l'invention.

On doit enfin remarquer que, bien que la description ait été particulièrement centrée sur le cas des cartes à données magnétiques, le domaine de l'invention s'étend à toute autre forme de support, telle que celle d'un disque magnétique souple ou rigide.

## Revendications

1. Tête d'enregistrement et de lecture de données magnétiques comportant un circuit magnétique (1) muni d'un entrefer (10) en matériau non magnétique d'épaisseur comprise entre 2 et 100 microns délimité par deux faces polaires rectangulaires disposées en vis-à-vis, la première étant de largeur $L_2$ supérieure à la largeur $L_1$ de la seconde qui comporte deux plaquettes réalisant avec elle au contact de l'entrefer une largeur $L_2$, ainsi que des moyens électriques (2) et (3) pour l'application et l'extraction respectives sur un support mobile de signaux d'enregistrement et de lecture en coopération avec l'entrefer (10), caractérisée en ce que les plaquettes sont des plaquettes latérales réalisées d'un seul tenant avec la seconde pièce polaire sur une épaisseur inférieure ou égale à 500 microns et donnant avec elle un contour rectangulaire égal à celui de la première pièce polaire, de manière à permettre un enregistrement de largeur de l'ordre de $L_2$ et une lecture de largeur de l'ordre de $L_1$ sur le support mobile.

2. Tête d'enregistrement et de lecture d'information magnétiques selon la revendication 1, caractérisée en ce que l'entrefer (10) est constitué par une couche de ferrite non magnétique disposée entre des pièces polaires en ferrite magnétique.

3. Tête magnétique selon la revendication 2, caractérisée en ce que l'épaisseur de l'entrefer est comprise entre 10 et 100 microns.

4. Tête magnétique selon la revendication 2, caractérisée en ce que l'épaisseur de l'entrefer est comprise entre 10 et 60 microns.

## Patentansprüche

1. Aufzeichnungs- und Lesekopf für magnetische Daten, mit einem Magnetkreis (1), der einen Spalt (10) aus unmagnetischem Material und mit einer Dicke zwischen 2 und 100 Mikron aufweist, welcher durch zwei rechtwinklige Polflächen begrenzt ist, die einander gegenüberliegend angeordnet sind, wovon die erste die Breite $L_2$ aufweist, welche größer als die Breite $L_1$ der zweiten ist, die zwei Scheiben aufweist, welche mit ihr an der Berührungsstelle mit dem Spalt eine Breite $L_2$ verwirklichen, sowie elektrischen Mitteln (2) und (3) zum Aufbringen von Aufzeichungssignalen auf bzw. Auslesen von Lesesignalen von einem beweglichen Träger im Zusammenwirken mit dem Spalt (10), dadurch gekennzeichnet, daß die Scheiben seitliche Scheiben sind, die einstückig mit dem zweiten Polteil über eine Dicke von 500 Mikron oder weniger verwirklicht sind und mit diesem eine rechtwinklige Kontur ergeben, die gleich derjenigen des ersten Polteils ist, so daß eine Aufzeichnung mit einer Breite in der Größenordnung von $L_2$ und ein Auslesen mit einer Breite in der Größenordnung von $L_1$ auf dem beweglichen Träger ermöglicht wird.

2. Aufzeichnungs- und Lesekopf für magnetische Informationen nach Anspruch 1, dadurch gekennzeichnet, daß der Spalt (10) durch eine unmagnetische Ferritschicht gebildet ist, die zwischen Polteilen aus magnetischem Ferrit angeordnet ist.

3. Magnetkopf nach Anspruch 2, dadurch gekennzeichnet, daß die Dicke des Spaltes zwischen 10 und 100 Mikron beträgt.

4. Magnetkopf nach Anspruch 2, dadurch gekennzeichnet, daß die Dicke des Spaltes zwischen 10 und 60 Mikron liegt.

**Claims**

1. Magnetic data recording and reading head comprising a magnetic circuit (1) equipped with a gap (10) of non-magnetic material of thickness between 2 and 100 microns bordered by two rectangular pole faces disposed facing each other, the first being of width $L_2$ greater than the width $L_1$ of the second which comprises two discs realizing therewith at the point of contact with the gap a width $L_2$, as well as electrical means (2) and (3) for the application of recording signals to and the readout of read signals from a mobile carrier in cooperation with the gap (10), characterized in that the discs are lateral discs which are made in one piece with the second pole piece over a thickness less or equal to 500 microns and form therewith a rectangular contour equal to that of the first pole piece so as to permit a recording of width of the order of magnitude of $L_2$ and a readout of width of the order of magnitude $L_1$ on the mobile support.

2. Magnetic information recording and reading head according to claim 1, characterized in that the gap (10) is formed by a non-magnetic ferrite layer disposed between the pole pieces of magnetic ferrite.

3. Magnetic head according to claim 2, characterized in that the thickness of the gap is between 10 and 100 microns.

4. Magnetic head according to claim 2, characterized in that the thickness of the gap is between 10 and 60 microns.

FIG.1

FIG.4

FIG.2

FIG.3

## FIG_5

## FIG_6-A

## FIG_6-B

## FIG_7

## FIG_8

# FIG_9

37
30
34
31

# FIG_10

37
30
31
34
39

# FIG_11

37
30
31
40
34
39

FIG_12

FIG_13

FIG_14